# EUROPÄISCHE PATENTSCHRIFT

(11) **EP 2 635 824 B1**
(45) Veröffentlichungstag und Bekanntmachung des Hinweises auf die Patenterteilung: **21.02.2018**
(21) Anmeldenummer: 12708132.1
(22) Anmeldetag: 09.03.2012
(51) Int. Cl.: F16D 65/092

(54) **REIBBELAGTRÄGERPLATTE**
FRICTION LINING CARRIER PLATE
PLAQUE SUPPORT DE REVÊTEMENT DE FRICTION

(30) Priorität: 25.03.2011 DE 102011001562
(43) Veröffentlichungstag der Anmeldung: 11.09.2013
(73) Patentinhaber: TMD Friction Services GmbH, 51381 Leverkusen (DE); Dömer GmbH Co. Kg Stanz- Und Umformtechnologie, 57368 Lengestadt-Langenei (DE)
(72) Erfinder: BORGMEIER, Olav, 42499 Hückeswagen (DE); DRESEN, Dirk, 51375 Leverkusen (DE); GRZANNA, Harald, 53721 Siegburg (DE); HOGENKAMP, Wolfgang, 42349 Wuppertal (DE); KIERSPEL, Thomas, 51467 Bergisch Gladbach (DE); MÜHL, Armin, 51643 Gummersbach (DE); RÖHLING, Willmut, 53809 Ruppichteroth (DE); SAKAGUCHI, Dai-Victor, 63584 Gründau (DE); STEEGE, Roland, 50674 Köln (DE); ASBECK, Jochen, 57439 Attendorn (DE); HAHNER, Christoph, 42719 Solingen (DE)
(74) Vertreter: Müller, Eckhard
(86) Internationale Anmeldenummer: PCT/EP2012/054082
(87) Internationale Veröffentlichungsnummer: WO 2012/130587

(56) Entgegenhaltungen:
- WO-A2-01/31225
- DE-A1- 2 008 057
- DE-A1- 3 119 894
- DE-A1- 4 335 001
- DE-A1-102009 032 661
- US-A- 5 033 590

## Beschreibung

Die Erfindung betrifft eine Reibbelagträgerplatte, die ein Blech, insbesondere ein Blech mit im wesentlichen gleichbleibender Dicke, aufweist, wobei das Blech reibbelagseitig eine erste Vertiefung und reibbelagseitig wenigstens eine zweite Vertiefung aufweist, wobei die erste und zweite Vertiefung eine unterschiedliche Tiefe aufweisen.

Aus dem Stand der Technik sind unterschiedlich ausgebildete Reibbelagträgerplatten für beispielsweise Scheibenbremsen bekannt, auf die ein Reibbelag angebracht wird. Bei der Gestaltung von neuen Reibbelagträgerplatten sind bestimmte Voraussetzungen zu erfüllen. So muss die Reibbelagträgerplatte derart ausgebildet sein, dass sichergestellt ist, dass sich der Reibbelag nicht lösen kann. Ferner muss die Reibbelagträgerplatte derart ausgebildet sein, dass sie die gleiche Hüllkontur wie bestehende Reibbelagträgerplatten aufweist, so dass die Reibbelagträgerplatte in bestehende Bremseinrichtungen eingebaut werden kann.

In der WO 2010/128133 wird eine Reibbelagträgerplatte offenbart, die aus umgeformtem Stahlblech von gleichmäßiger Dicke besteht. Die Reibbelagträgerplatte weist eine zum Reibbelag weisende Vorderseite und eine zu einem Bremszylinder weisende Rückseite auf. Des Weiteren weist die Reibbelagträgerplatte reibbelagseitig eine Vertiefung und einen Stegbereich auf, der sich entlang des Außenrands der Reibbelagträgerplatte erstreckt und sich von dem Boden der Vertiefung weg in eine Richtung zur Rückseite erstreckt. Die Vertiefung der Vorderseite ist derart ausgebildet, dass die Reibbelagträgerplatte eine derartige Dicke aufweist, dass sie in die bestehenden Bremseinrichtungen eingebaut werden kann.

In US 2004/ 0 140 165 A1 und DE 1 957 751 wird jeweils eine Reibbelagträgerplatte mit einem Belagträger offenbart. In den Belagträgern ist eine Vielzahl von Vertiefungen vorgesehen. Dabei weisen die einzelnen Vertiefungen unterschiedliche Tiefen auf. Die dem Betätigungsmittel zugewandte Seite des Belagträgers ist eben ausgebildet.

In DE 71 33 858 U, DE 195 07 916 A1, DE 10 2009 032 661 A1, WO 01/ 31 225 A2, DE 197 06 123 A1, DE 10 2004 051 046 A1 und WO 2010/ 123 133 A1 wird jeweils eine Reibbelagträgerplatte offenbart. Die Reibbelagträgerplatte weist einen Belagträger auf, in dem eine Vielzahl von Vertiefungen ausgebildet sind, wobei alle Vertiefungen die gleiche Tiefe besitzen. Die Vertiefungen sind betätigungsmittelseitig als Erhebungen ausgebildet.
Ein Nachteil der bekannten Reibbelagträgerplatten besteht darin, dass das Stahlblech dick ist und daher die Reibbelagträgerplatte ein hohes Gewicht aufweist.

Aus der DE 43 35 001 A1 ist ein Bremsbelag für Scheibenbremsen mit einer Bremsbelagträgerplatte bekannt, welche einen Reibbelag trägt. Auf der Rückseite der Trägerplatte sind ein Dämpfungsblech und eine Haltefeder befestigt, welche das Dämpfungsblech sichert. Die Belagträgerplatte weist reibbelagseitig eine erste und eine zweite Vertiefung auf, wobei die erste und zweite Vertiefung eine unterschiedliche Tiefe aufweisen und betätigungsmittelseitig als jeweils eine Erhebung ausgebildet sind. Die erste und die zweite Erhebung dienen als Sockelbereich und Stiftbereich für eine Vernietung mit der Haltefeder, bei welcher der Stiftbereich zu einem Nietkopf verbreitert wird.

Die US 5 033 590 A weist einen Bremsbelag mit einer Bremsbelagträgerplatte sowie einen Verschleißanzeiger auf, welcher an der Belagträgerplatte angeordnet ist.

Aus der DE 20 08 057 A1 ist eine Bremsbacke mit Bremsbelag und einer Trägerplatte für eine Teilbelagträgerplatte bekannt. Die Trägerplatte ist teilweise mit Abkröpfungen versehen, welche bei Abnutzung des Bremsbelages als Verschleißanzeiger wirken.

Aus der DE 31 19 894 A1 ist eine Teilbelagsscheibenbremse bekannt, die zur Herabsetzung eines Quietschgeräusches mit einem in einem Hauptkolben axial verschiebbar angeordneten Hilfskolben versehen ist, welcher von der gleichen Druckmittelquelle wie der Hauptkolben beaufschlagt wird.

Die Aufgabe der Erfindung besteht daher darin, die zuvor genannten Nachteile zu vermeiden.

Die Aufgabe wird durch den Gegenstand des Patentanspruchs 1 gelöst. Vorteilhafte Ausgestaltungen der Erfindung sind Gegenstand der Unteransprüche.

Erfindungsgemäß ist eine Reibbelagträgerplatte vorgesehen, die ein Blech aufweist. Das Blech ist derart umgeformt, dass es reibbelagseitig eine erste und wenigstens eine zweite Vertiefung aufweist. Die erste und zweite Vertiefung sind derart ausgebildet, dass sie eine unterschiedliche Tiefe aufweisen.

Im Sinne der Erfindung wird unter einer Vertiefung ein Bereich der Reibbelagträgerplatte verstanden, der bezogen auf einen anderen Bereich der Reibbelagträgerplatte abgesenkt ist. Die Vertiefung kann beispielsweise durch Einprägung der Reibbelagträgerplatte erzeugt werden. Die erste und zweite Vertiefung werden dadurch erzeugt, dass auf eine zum Reibbelag weisende Vorderseite der Reibbelagträgerplatte eine Druckkraft aufgebracht wird. Die Druckkraft ist in eine Richtung weg von dem Reibbelag bzw. eine Richtung zu einem Betätigungsmittel gerichtet. Die erste und zweite Vertiefung bilden sich betätigungsmittelseitig jeweils als eine Erhebung aus. Als Vorderseite der Reibbelagträgerplatte wird die dem Reibbelag zugewandte Seite verstanden. Als Rückseite wird die dem Reibbelag abgewandte Seite der Reibbelagträgerplatte verstanden.

Vorteilhafterweise erfolgt das Umformen der Reibbelagträgerplatte derart, dass durch das Vorsehen einer ersten und zweiten Vertiefung sichergestellt werden kann, dass auch bei einer Verwendung von einer dünnen Reibbelagträgerplatte die benötigte Hüllkontur eingehalten werden kann. Somit wird durch ein derartiges Umformen sichergestellt, dass die Reibbelagträgerplatte eine derartige Dicke aufweist, dass sie in eine bestehende Bremseinrichtung eingebaut werden kann. So kann beispielsweise die durch die Geometrie der Bremseinrichtung benötigte Dicke von 9 mm für die Reibbelagträgerplatte durch das erfindungsgemäße Umformen beispielsweise einer 5 mm dicken Reibbelagträgerplatte erreicht werden. Dadurch ist gewährleistet, dass die Reibbelagträgerplatte in eine bestehende Bremseinrichtung eingebaut werden kann. Die Verwendung einer dünnen Reibbelagträgerplatte, wie beispielsweise eines 5 mm dicken Blechs, bietet den Vorteil, dass sich das Gewicht der Reibbelagträgerplatte reduziert. Ein weiterer Vorteil besteht darin, dass das bei der Fertigung der Reibbelagträgerplatte zu entsorgende Volumen sich verringert, da die Reibbelagträgerplatte dünner ausgebildet ist.

Als Dicke der Reibbelagträgerplatte wird der Abstand der Reibbelagträgerplatte zwischen der dem Reibbelag und der dem Betätigungsmittel zugewandten Seite verstanden.

Ein weiterer Vorteil der Erfindung besteht darin, dass durch das Verwenden von wenigstens zwei Vertiefungen mit unterschiedlicher Tiefe die Menge des eingesetzten Reibbelags im Vergleich zu einer Reibbelagträgerplatte, die nur eine einzige Vertiefung aufweist, verringert werden kann, unter der Voraussetzung, dass die Reibbelagträgerplattendicke der beiden Reibbelagträgerplatten gleich ist. Dies ergibt sich, weil die erste und zweite Vertiefung unterschiedliche Tiefen besitzen. Die erste Vertiefung weist eine kleinere Tiefe auf als die zweite Vertiefung oder umgekehrt. Folglich wird weniger Reibbelagmaterial benötigt, da aufgrund der geringeren Tiefe der ersten Vertiefung weniger Reibbelagmaterial zum Ausfüllen der ersten und zweiten Vertiefung benötigt wird als bei Vorsehen einer Reibbelagträgerplatte mit nur einer Vertiefung mit konstanter Tiefe. Im Ergebnis wird durch die durch Umformung eingebrachten Vertiefungen an der Reibbelagträgerplattenrückseite auf der Reibbelagträgerplattenvorderseite Reibmaterial verdrängt. Folglich wird das Gesamtgewicht des Reibbelags reduziert. Zusätzlich erhält die Reibbelagträgerplatte aufgrund der eingeformten Vertiefungen eine höhere Biege- und Torsionssteifigkeit. Ferner kann durch Verwenden einer Reibbelagträgerplatte mit veringerter Materialstärke ein geringeres Einbauvolumen bei gleichem Verschleißvolumen erzeugt werden. Das Reibbelagmaterial und /oder eine Zwischenschicht kann beispielsweise durch Kleben an die Reibbelagträgerplatte angebracht werden.

Das Einprägen der Reibbelagträgerplatte für die zweite Vertiefung erfolgt erfindungsgemäß an denjenigen Stellen der Reibbelagträgerplatte, die betätigungsmittelseitig mit weiteren Bauteilen, wie zum Beispiel einem Bremskolben, in Kontakt gebracht werden können. Dabei erfolgt das Einprägen der Reibbelagträgerplatte derart, dass reibbelagseitig die zweite Vertiefung eine Tiefe bzw. betätigungsmittelseitig eine derartige hohe zweite Erhebung aufweist, dass sichergestellt ist, dass das Betätigungsmittel die zweite Erhebung beim Bremsvorgang kontaktieren kann.

In einer bevorzugten Ausführung der Erfindung kann ein Material mit einer geringeren Wärmeleitfähigkeit als der Reibbelag in die erste und/ oder zweite Vertiefung eingebracht werden. Dadurch wird die während des Bremsvorgangs dem Betätigungsmittel zugeführte Wärme reduziert, wodurch sich die Gefahr einer Beschädigung des Betätigungsmittels reduziert.

Durch das Vorsehen der ersten und zweiten Vertiefung können die lokalen Dickenverhältnisse des in die erste und zweite Vertiefung eingebrachten Reibbelags eingestellt werden. So weist der Reibbelag an Stellen, in denen dieser in die erste und zweite Vertiefung eingebracht ist, eine höhere Dicke auf als an Stellen, in denen dieser nur in die erste Vertiefung eingebracht ist bzw. der Reibbelag weist reibbelagträgerpattenseitig eine erste und zweite Erhebungen auf, die im eingebrachten Zustand des Reibbelags in die erste bzw. zweite Vertiefung der Reibbelagträgerplatte eindringen. Dabei sind die erste und zweite Erhebung derart ausgebildet, dass sie sich unterschiedlich weit in Richtung zu der Reibbelagträgerplatte erstrecken.

Aufgrund der unterschiedlichen lokalen Dickenverhältnisse des Reibbelags bzw. der unterschiedlichen Erstreckung der ersten und zweiten Erhebung wird eine einstellbare Federwirkung und somit eine Flexibilität des Reibbelags erzielt. Durch das Einstellen der lokalen Dickenverhältnisse des Reibbelags kann erreicht werden, dass sich eine Rissneigung des Reibbelags infolge der höheren Gesamtflexibilität des Bremsbelags reduziert. Des Weiteren kann erreicht werden, dass eine gleichmäßigere Wärmeeinleitung in eine Bremsscheibe und/ oder Reibbelagträgerplatte aufgrund einer besseren Anlage des Reibbelags an der Bremsscheibe erfolgt. Dadurch reduziert sich die Rissneigung der Bremsscheibe. Durch die einstellbare Federwirkung des Reibbelags kann bei einem Bremsvorgang eine höhere Dämpfung, insbesondere eine höhere lokale Dämpfung, erfolgen. Dies bewirkt eine Geräuschreduzierung beim Bremsvorgang. Des Weiteren kann durch das Einstellen der lokalen Dickenverhältnisse die Kompressibilität des Reibbelags über die Dicke des Reibbelags gezielt eingestellt werden. D.h., dass der Reibbelag härter eingestellt werden kann. Die Einstellung der Kompressibilität über die Dicke des Reibbelags führt zu einer Komfortverbesserung, da sich über die Lebensdauer des Reibbelags eine geringere Kompressibilitätsänderung ergibt. Es ist klar, dass die zweite Vertiefung an den Stellen der Reibbelagträgerplatte vorgesehen werden kann, an denen es notwendig ist, die lokalen Dickenverhältnisse des Reibbelags einzustellen.

Ein weiterer Vorteil eines Vorsehens eines Reibbelags mit unterschiedlichen Dickenverhältnissen bzw. mit einer ersten und zweiten Erhebung besteht darin, dass bei gleichem Einbauvolumen und Verschleißvolumen der Reibbelag eine geringere Masse aufweist als bei Reibbelägen, die die gleiche Dicke bzw. nur eine Erhebung aufweisen.

Die zweite Vertiefung kann unterschiedliche Formen aufweisen. So kann diese bei einer Betrachtung auf die Vorderseite der Reibbelagträgerplatte kreisförmig oder vieleckförmig, insbesondere viereckig, ausgebildet sein. Die Breite der zweiten Vertiefung kann konstant oder variabel sein. Die Seiten des Vielecks können unterschiedlich verlaufen und eine unterschiedliche Breite aufweisen. So können die Seiten geradlinig oder bogenförmig verlaufen oder eine andere Verlaufsform aufweisen.

Als Breite wird der Abstand in der Vorderseite bzw. Rückseite zwischen den sich gegenüberliegenden Vertiefungswänden verstanden, die die Vertiefung begrenzen.

Bei der Reibbelagträgerplatte kann es sich um ein Stanzblech mit einer Dicke von 1 mm bis 15 mm, insbesondere 5 mm, handeln. Die Reibbelagträgerplatte kann aus dem Stahl S355MC bestehen. Natürlich kann die Reibbelagträgerplatte aus einem anderen Stahl bestehen, der durch Umformen bearbeitet werden kann. Die Reibbelagträgerplatte kann eine konstante bzw. gleichmäßige Dicke aufweisen. Die Dicke der Reibbelagträgerplatte bleibt auch nach dem Umformen im Wesentlichen gleichmäßig, wobei Dickenabweichungen in geringem Umfang nur auf das Umformen der ursprünglich gleichmäßig dicken Reibbelagträgerplatte zurückzuführen sind.

Die Reibbelagträgerplatte wird erfindungsgemäß derart geprägt, dass sich reibbelagseitig am Reibbelagträgerplattenrand ein umlaufender Steg ausbildet, der von der ersten bzw. zweiten Vertiefung in eine Richtung weg von der Rückseite der Reibbelagträgerplatte vorsteht. Durch diesen Steg wird sichergestellt, dass sich während des Bremsvorgangs der Reibbelag aufgrund der auf den Reibbelag wirkenden Scherkräfte von der Reibbelagträgerplatte nicht lösen kann.

Der Steg kann derart ausgebildet sein, dass er Unterbrechungen aufweist. Als Unterbrechungen werden Abschnitte im Reibbelagträgerplattenrand verstanden, die nicht geprägt worden sind.

In einer bevorzugten Ausführungsform kann betätigungsmittelseitig oder reibbelagseitig wenigstens ein Anlagemittel an der Reibbelagträgerplatte angebracht werden. Das Anlagemittel kann betätigungsmittelseitig und/ oder reibbelagseitig an den Reibbelagträgerplattenrand angebracht werden. Das Anbringen des Anlagemittels an der Reibbelagträgerplatte kann durch Schweißen erfolgen. Es ist auch möglich, das Anlagemittel anzunieten oder in Durchgangslöcher oder Sacklöcher der Trägerplatte einzuformen. Alternativ besteht auch die Möglichkeit, die Anlagemittel einstückig durch Umformen an die Bremsträgerplatte anzuformen. Dabei wird die Bremsträgerplatte derart umgeformt, dass das umgeformte Anlagemittel senkrecht oder im Wesentlichen senkrecht zu der Bremsträgerplatte ausgebildet sein kann. Die Anlagemittel erhöhen die Festigkeit der Trägerplatte und können dazu verwendet werden, die Reibbelagträgerplatte an eine Grundform der Bremseinrichtung zu fixieren. Dadurch wird sichergestellt, dass sich die Reibbelagträgerplatte von der Bremseinrichtung nicht lösen kann, für den Fall, dass der Reibbelag nahezu vollständig abgetragen ist. Die Anlagemittel können alternativ auch an der Grundform einer Bremseinrichtung anstelle an der Belagträgerplatte angebracht werden.

Die Reibbelagträgerplatte kann betätigungsmittelseitig derart umgeformt werden, dass sich reibbelagseitig wenigstens ein Vorsprung ausbildet, der im zusammengesetzten Zustand der Reibbelagträgerplatte und des Reibbelags in den Reibbelag eindringt. Der Vorsprung kann noppenartig ausgebildet sein und erstreckt sich von dem Boden der ersten und/ oder zweiten Vertiefung in eine Richtung weg von der Rückseite der Reibbelagträgerplatte. Der Vorsprung kann an seiner zum Reibbelag weisenden Stirnfläche eine Aussparung aufweisen, die symmetrisch zu einer Vorsprungmittelachse sein kann. Der Vorsprung kann zusätzlich oder alternativ zu der Aussparung an seiner Umfangsseite eine Hinterschneidung aufweisen. So kann sich die Hinterschneidung zwischen dem Boden der ersten und/ oder zweiten Vertiefung und der Umfangsseite des Vorsprungs befinden. Durch eine derartige Ausgestaltung des Vorsprungs wird zusätzlich zur Fixierung durch den Steg eine weitere Fixierung des Reibbelags an der Reibbelagträgerplatte erreicht.

Ferner kann in einer vorteilhaften Ausgestaltung wenigstens ein Versteifungsmittel zumindest bereichsweise in der ersten und/ oder zweiten Vertiefung und/oder Hinterschneidung vorgesehen sein. Bei dem Versteifungsmittel kann es sich beispielsweise um ein Metallgitter oder Blech handeln. Eine Fixierung des Versteifungsmittels erfolgt dabei beispielsweise durch den Reibbelag an der Reibbelagträgerplatte. Das Versteifungsmittel wirkt bei einer Druckbeanspruchung des Reibbelags durch das Betätigungsmittel als ein Zuganker, wodurch die Versteifung des Reibbelags erhöht wird.

Eine Reibbelagträgerplatte mit einer Dicke von beispielsweise 5 mm kann derart geformt werden, dass die erste Vertiefung ausgehend von einer dem Reibbelag zugewandten Stirnfläche des Stegs um beispielsweise 0,5 mm bis 5 mm, insbesondere 2,5 mm abgesenkt ist. Die zweite Vertiefung kann ausgehend von dem Boden der ersten Vertiefung um beispielsweise 1 mm bis 5 mm, insbesondere 1,5 mm abgesenkt werden. Die Vertiefungen werden derart ausgebildet, dass der Abstand zwischen der zum Reibbelag weisenden Stirnfläche des Stegs und der zum Betätigungsmittel weisenden Stirnfläche der Erhebung, die der reibseitigen zweiten Vertiefung entspricht, eine definierte Dicke, insbesondere 15 mm nicht übersteigt. Der Vorsprung kann sich reibbelagseitig von dem Boden der ersten und/ oder zweiten Vertiefung um 1 bis 5 mm weg von dem Boden der ersten oder zweiten Vertiefung in eine Richtung zum Reibbelag erstrecken, wobei die zum Reibbelag weisende Stirnfläche des Vorsprungs nicht bündig oder bündig mit der zum Reibbelag weisenden Stirnfläche des Stegs sein kann.

Die erste und zweite Vertiefungen können derart ausgebildet sein, dass die Bodenfläche der ersten Vertiefung 1 - 90 % und die Bodenfläche der zweiten Vertiefung 1 - 90'% der gesamten Reibbelagträgerplattenfläche ausmachen. Durch eine derartige Ausbildung der Bodenfläche der ersten und zweiten Vertiefung kann sichergestellt werden, dass wenig Reibbelag eingesetzt wird. Ferner ist gleichzeitig sichergestellt, dass ein Betätigungsmittel betätigungsmittelseitig mit der ersten und/ oder zweiten Erhebung, die der reibbelagseitigen ersten und/ oder zweiten Vertiefung entspricht, in Kontakt gebracht werden kann bzw. durch Einstellen der lokalen Dickenverhältnisse die Eigenschaften des Reibbelags in zuvor beschriebener positiver Weise beeinflusst werden können.

In einer vorteilhaften Ausgestaltung der Erfindung kann an der Bremsträgerplatte ein Verschleißermittlungsmittel zum Ermitteln des Verschleißes des Reibbelags vorgesehen sein. Durch das Verschleißermittlungsmittel kann auf einfache Weise ein Verschleiß des Reibbelags ermittelt und im Endeffekt eine Beschädigung einer Bremsscheibe bzw. der Bremsträgerplatte durch ein direktes Kontaktieren der Bremsscheibe mit der Bremsträgerplatte verhindert werden.

Im Sinne der Erfindung wird als Bremsbelag die Baueinheit verstanden, die sich beim Einbringen des erfindungsgemäßen Reibbelags in die erfindungsgemäße Reibbelagträgerplatte ausbildet. Der Bremsbelag kann in einer bevorzugten Ausführung in einer Bremseinrichtung vorgesehen sein. Genauer gesagt können zwei Bremsbeläge in einer Bremseinrichtung vorgesehen sein, wobei die zwei Bremsbeläge an sich gegenüberliegenden Seiten der Bremsscheibe angeordnet sind. Bei einem Bremsvorgang wird der jeweilige Reibbelag der Bremsbeläge gegen die Bremsscheibe gedrückt.

Die Bremsbeläge sind in einer Bremsbelagaufnahme untergebracht. Sowohl die Bremsbeläge als auch die Bremsbelagaufnahme sind in einer Richtung zu der Bremsscheibe oder von dieser weg axial verschiebbar. Die Bremseinrichtung weist den Vorteil auf, dass diese mit kleiner Baugröße und kleiner Masse vorgesehen werden kann, da in der Bremseinrichtung die leichtere und kleinere Reibbelagträgerplatte bzw. der erfindungsgemäße Reibbelag eingesetzt wird. In der Bremsbelagaufnahme können die Anlagemittel zum Fixieren des Bremsbelags vorgesehen sein.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnungen.

Hierzu zeigen:
- Fig. 1: eine erfindungsgemäße Reibbelagträgerplatte bei einer Sicht auf eine dem Reibbelag zugewandten Vorderseite,
- Fig. 2: eine Seitenschnittansicht der Reibbelagträgerplatte entlang des Schnitts A-A aus Fig. 1,
- Fig. 3: eine Seitenschnittansicht der Reibbelagträgerplatte entlang des Schnitts B-B aus Fig. 1,
- Fig. 4: eine vergrößerte Darstellung des Bereichs A aus Fig. 3.

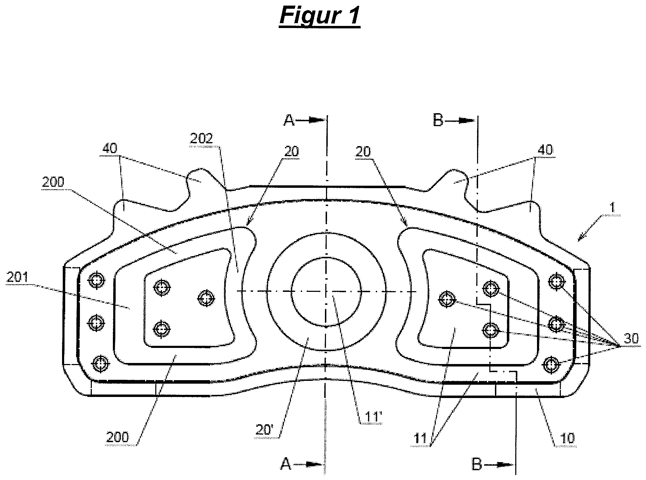

Die in Fig. 1 gezeigte Reibbelagträgerplatte 1 weist mehrere Befestigungsmittel 40 zum Befestigen der Reibbelagträgerplatte 1 an eine nicht dargestellte Bremseinrichtung auf. Des Weiteren weist die Reibbelagträgerplatte 1 reibbelagseitig einen Steg 10, der entlang des Reibbelagträgerplattenrands verläuft, eine erste Vertiefung 11 und zwei unterschiedlich ausgebildete zweite Vertiefungen 20, 20' auf. Der Steg 10 erstreckt sich von der ersten Vertiefung 11 in eine Richtung weg von der Rückseite der Reibbelagträgerplatte 1. Ferner weist die Reibbelagträgerplatte 1 eine Vielzahl von Vorsprüngen 30 auf, die sich von dem Boden der ersten Vertiefung 11 in die Richtung weg von der Rückseite der Reibbelagträgerplatte 1 erstrecken.

Eine zweite Vertiefung 20' ist kreisförmig ausgebildet und umschließt eine kreisförmige erste Vertiefung 11'.Die Breite der zweiten kreisförmigen Vertiefung 20 ist konstant und beträgt vorzugsweise 10 mm. Die kreisförmige zweite Vertiefung 20' ist zwischen zwei gleich ausgebildeten zweiten Vertiefungen 20 angeordnet, die jeweils eine viereckige Form aufweisen. Die einzelnen Seiten 200, 201, 202 der zwei gleich ausgebildeten zweiten Vertiefungen 20 weisen eine unterschiedliche Breite auf. So weisen die Seiten 200, 202 der jeweiligen zweiten Vertiefung 20 die gleiche Breite von vorzugsweise 7 mm und eine Seite 201 eine Breite von vorzugsweise 12mm auf. Des Weiteren sind drei der vier miteinander verbundenen Seiten der zweiten Vertiefung 20 als Gerade und eine Seite 202 bogenförmig ausgebildet. Die zwei sich gegenüberliegenden gerade verlaufenden Seiten 200 verlaufen nicht parallel zueinander.

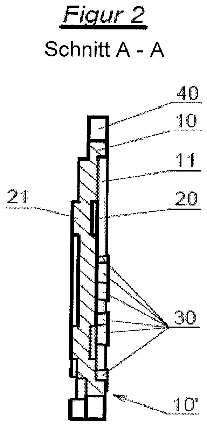

Fig. 2 zeigt eine Seitenschnittansicht der Reibbelagträgerplatte 1 entlang eines Schnitts A-A aus Fig. 1. Wie aus Fig. 2 ersichtlich ist, ist eine zum Reibbelag zugewandte Stirnfläche des Befestigungsmittels 40 bündig mit einer zum Reibbelag zugewandten Stirnfläche 10' des Stegs 10. Die Reibbelagträgerplatte 1 ist derart geformt, dass sich reibbefagseitig die erste Vertiefung 11 ausbildet. Die erste Vertiefung 11 ist bezüglich der zum Reibbelag weisenden Stirnfläche 10' des Stegs 10 abgesenkt. Zum Ausbilden der ersten Vertiefung 11 wird beim Umformen reibbelagseitig eine Druckkraft auf die Vorderseite der Reibbelagträgerplatte 1 in Richtung zur Rückseite der Reibbelagträgerplatte 1 ausgeübt.

Auf den Boden der ersten Vertiefung 11 wird eine weitere Druckkraft in Richtung zur Rückseite der Reibbelagträgerplatte 1 ausgeübt, so dass sich die zum Boden der ersten Vertiefung 11 abgesenkte zweite Vertiefung 20' ausbildet. Die reibbelagseitig ausgebildete zweite Vertiefung 20' stellt sich betätigungsmittelseitig als eine zweite Erhebung 21 dar. Die zweite Erhebung 21 wird beim Bremsvorgang mit einem in den Figuren nicht dargestellten Betätigungsmittel in Kontakt gebracht.

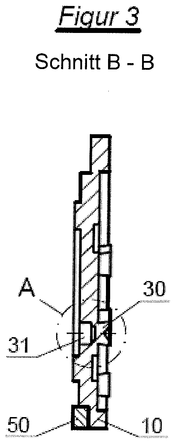

Fig. 3 zeigt eine Seitenschnittansicht der Reibbelagträgerplatte 1 entlang des Schnitts B-B aus Figur 1. Die Vorsprünge 30 ragen von dem Boden der ersten Vertiefung 11 in eine Richtung weg von der Rückseite der Bremsträgerplatte derart hervor, dass deren jeweilige Stirnfläche nicht bündig mit der Stirnfläche 10' des Stegs 10 abschließt. Zum Ausbilden der Vorsprünge 30 wird betätigungsmittelseitig eine Druckkraft auf die Rückseite der Reibbelagträgerplatte 1 in Richtung zum Reibbelag ausgeübt. Infolge der Druckkraft bilden sich betätigungsmittelseitig Rückseitenvertiefungen 31 aus, die reibbelagseitig den Vorsprüngen 30 entsprechen.

Ein Anlagemittel 50 ist mit einem Abschnitt des betätigungsmittelseitigen Reibbelagträgerplattenrands, der dem reibbelagseitigen Steg entspricht, verbunden. Das Anlagemittel 50 wird durch Schweißen mit dem betätigungsmittelseitigen Reibbelagträgerplattenrand verschweißt.

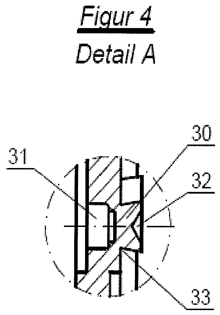

Fig. 4 zeigt eine vergrößerte Darstellung des Vorsprungs aus Fig. 3. Der Vorsprung 30 ist derart ausgebildet, dass er an seiner zum Reibbelag weisenden Stirnseite eine Aussparung 32 aufweist. Die Aussparung 32 ist zur nicht dargestellten Vorsprungsmittelachse symmetrisch ausgebildet. Der Vorsprung 30 erstreckt sich reibbelagseitig von der ersten Vertiefung 11 derart, dass sich zwischen der Umfangsseite des Vorsprungs 30 und dem Boden der ersten Vertiefung 11 eine Hinterschneidung 33 ausbildet.

### Bezugszeichenliste

- 1: Reibbelagträgerplatte
- 10: Steg
- 10': Stirnfläche
- 11: erste Vertiefung
- 11: erste kreisförmige Vertiefung
- 20: zweite Vertiefung
- 20': zweite kreisförmige Vertiefung
- 21: zweite Erhebung
- 30: Vorsprung
- 31: Rückseitenvertiefung
- 32: Aussparung
- 33: Hinterschneidung
- 40: Befestigungsmittel
- 50: Anlagemittel
- 200: gerade verlaufende Seite
- 201: gerade verlaufende Seite
- 202: bogenförmig verlaufende Seite

## Patentansprüche

1. Reibbelagträgerplatte (1), die ein Blech, insbesondere ein Blech mit im wesentlichen gleichbleibender Dicke, aufweist, wobei das Blech reibbelagseitig eine erste Vertiefung (11) und reibbelagseitig wenigstens eine zweite Vertiefung (20) aufweist, wobei die erste und zweite Vertiefung (11, 20) eine unterschiedliche Tiefe aufweisen und die erste und zweite reibbelagseitige Vertiefung betätigungsmittelseitig als jeweils eine Erhebung ausgebildet sind, wobei die zweite Vertiefung (20) an den Stellen der Reibbelagträgerplatte (1) eingeprägt ist, die betätigungsmittelseitig mit einem Betätigungsmittel in Kontakt bringbar sind, wobei die zweite Vertiefung (20) reibbelagseitig eine Tiefe bzw. betätigungsmittelseitig eine derartige hohe zweite Erhebung (21) aufweist, so dass das Betätigungsmittel die zweite Erhebung (21) beim Bremsvorgang kontaktieren kann, und reibbelagseitig um den Reibbelagträgerplattenrand ein Steg (10) umläuft, wobei der Steg (10) sich von der ersten Vertiefung weg erstreckt.

2. Reibbelagträgerplatte (1) nach einem der vorhergehenden Ansprüche, **dadurch gekennzeichnet, dass** reibbelagseitig wenigstens ein Vorsprung (30), insbesondere ein noppenartiger Vorsprung, vorgesehen ist, wobei sich der Vorsprung (30) von dem Boden der ersten und/ oder zweiten Vertiefung (11, 20) erstreckt.

3. Reibbelagträgerplatte (1) nach Anspruch 2, **dadurch gekennzeichnet, dass** der Vorsprung (30) eine Aussparung (32), insbesondere in einer zum Reibbelag weisenden Stirnfläche des Vorsprungs (30), aufweist und/ oder auf der Umfangsseite des Vorsprungs (30) wenigstens eine Hinterschneidung (33) ausgebildet ist.

4. Reibbelagträgerplatte (1) nach Anspruch 3, **dadurch gekennzeichnet, dass** die Hinterschneidung (33) zwischen dem Boden der ersten und/ oder zweiten Vertiefung (11, 20) und der Umfangsseite des Vorsprungs (30) vorgesehen ist.

5. Reibbelagträgerplatte (1) nach einem der vorhergehenden Ansprüche, **dadurch gekennzeichnet, dass** der Steg (10) Unterbrechungen aufweist.

6. Reibbelagträgerplatte (1) nach einem der vorhergehenden Ansprüche, **dadurch gekennzeichnet, dass** betätigungsmittelseitig und/ oder reibbelagseitig wenigstens ein Anlagemittel (50) angebracht ist.

7. Reibbelagträgerplatte (1) nach einem der vorhergehenden Ansprüche 3 bis 6, **dadurch gekennzeichnet, dass** wenigstens ein Versteifungsmittel wenigstens bereichsweise in der ersten und/oder zweiten Vertiefung (11, 20) und/oder Hinterschneidung (33) vorgesehen ist.

8. Reibbelagträgerplatte (1) nach einem der vorhergehenden Ansprüche, **dadurch gekennzeichnet, dass** das Blech eine Dicke von 1-15 mm aufweist.

9. Reibbelagträgerplatte (1) nach einem der vorhergehenden Ansprüche, **dadurch gekennzeichnet, dass** die Bodenfläche der ersten Vertiefung (11) 1-90% und die Bodenfläche der zweiten Vertiefung (20) 1-90% der gesamten reibbelagseitigen Bremsbelagträgeroberfläche ausmachen.

## Claims

1. Friction lining carrier plate (1), having a metal sheet, in particular a metal sheet with a substantially constant thickness, wherein the metal sheet has a first indentation (11) on the side of the friction lining, and has at least a second indentation (20) on the side of the friction lining, wherein the first and the second indentation (11, 20) have different depths, and the first and the second indentations on the side of the friction lining are formed as respectively one elevation on the side of the actuation means, wherein the second indentation (20) is impressed at the positions of the friction lining carrier plate (1) that can be brought into contact with the actuation means on the side of the actuation means, wherein the second indentation (20) has a depth on the side of the friction lining or has such a high elevation (21) on the side of the actuation means that the actuation means can come into contact with the second elevation (21) during the braking process, and a web (10) extends circumferentially about the friction lining carrier plate edge on the side of the friction lining, wherein the web (10) extends away from the first indentation.

2. Friction lining carrier plate (1) according to any of the preceding claims, **characterized in that** at least one projection (30), in particular a nub-like projection, is provided on the side of the friction lining, wherein the projection (30) extends from the bottom of the first and / or second indentation (11, 20).

3. Friction lining carrier plate (1) according to claim 2, **characterized in that** the projection (30) has a recess (32), in particular at a front face of the projection (30) that is facing towards the friction lining, and / or at least one undercut (33) is formed on the circumferential side of the projection (30).

4. Friction lining carrier plate (1) according to claim 3, **characterized in that** the undercut (33) is provided between the bottom of the first and / or the second indentation (11, 20) and the circumferential side of the projection (30).

5. Friction lining carrier plate (1) according to any of the preceding claims, **characterized in that** the web (10) has interruptions.

6. Friction lining carrier plate (1) according to any of the preceding claims, **characterized in that** at least one abutment means (50) is attached on the side of the actuation means and / or on the side of the friction lining.

7. Friction lining carrier plate (1) according to any of the preceding claims 3 to 6, **characterized in that** at least one stiffening means is provided at least in certain areas in the first and / or the second indentation (11, 20) and / or the undercut (33).

8. Friction lining carrier plate (1) according to any of the preceding claims, **characterized in that** the metal sheet has a thickness of 1-15 mm.

9. Friction lining carrier plate (1) according to any of the preceding claims, **characterized in that** the bottom surface of the first indentation (11) constitutes 1-90% and the bottom surface of the second indentation (20) constitutes 1-90% of the entire brake lining carrier surface on the friction lining side.

## Revendications

1. Plaquette de support de garniture de friction (1), qui présente une tôle, en particulier une tôle présentant une épaisseur essentiellement constante, dans laquelle la tôle présente sur le côté de la garniture de friction un premier creux (11) et sur le côté de la garniture de friction au moins un second creux (20), dans laquelle la premier et le second creux (11, 20) présentent une profondeur différente et le premier et le second creux sur le côté de la garniture de friction sont formés sur le côté du moyen d'actionnement respectivement sous la forme d'une élévation, dans laquelle le second creux (20) est embouti aux endroits de la plaquette de support de garniture de friction (1), qui peuvent être mis en contact sur le côté du moyen d'actionnement avec un moyen d'actionnement, dans laquelle le second creux (20) présente sur le côté de la garniture de friction une profondeur ou sur le côté du moyen d'actionnement une deuxième élévation (21) d'une hauteur telle que le moyen d'actionnement puisse entrer en contact avec la seconde élévation (21) lors d'une opération de freinage, et une nervure (10) entoure sur le côté de la garniture de friction un bord de la plaquette de support de garniture de friction, dans laquelle la nervure (10) s'étend à partir du premier creux.

2. Plaquette de support de garniture de friction (1) selon la revendication précédente, **caractérisée en ce qu'**il est prévu sur le côté de la garniture de friction au moins une saillie (30), en particulier une saillie en forme de bouton, dans laquelle la saillie (30) s'étend à partir du fond du premier et/ou du second creux (11, 20).

3. Plaquette de support de garniture de friction (1) selon la revendication 2, **caractérisée en ce que** la saillie (30) présente une découpe (32), en particulier dans une face frontale de la saillie (30) orientée vers la garniture de friction, et/ou au moins une contre-dépouille (33) est formée sur le côté périphérique de la saillie (30).

4. Plaquette de support de garniture de friction (1) selon la revendication 3, **caractérisée en ce que** la contre-dépouille (33) est prévue entre le fond du premier et/ou du second creux (11, 20) et le côté périphérique de la saillie (30).

5. Plaquette de support de garniture de friction (1) selon l'une quelconque des revendications précédentes, **caractérisée en ce que** la nervure (10) présente des interruptions.

6. Plaquette de support de garniture de friction (1) selon l'une quelconque des revendications précédentes, **caractérisée en ce que** au moins un moyen d'appui (50) est placé sur le côté du moyen d'actionnement et/ou sur le côté de la garniture de friction.

7. Plaquette de support de garniture de friction (1) selon l'une quelconque des revendications précédentes 3 à 6, **caractérisée en ce qu'**il est prévu au moins un moyen de raidissement au moins localement dans le premier et/ou le second creux (11, 20) et/ou la contre-dépouille (33).

8. Plaquette de support de garniture de friction (1) selon l'une quelconque des revendications précédentes, **caractérisée en ce que** la tôle présente une épaisseur de 1 - 15 mm.

9. Plaquette de support de garniture de friction (1) selon l'une quelconque des revendications précédentes, **caractérisée en ce que** la face du fond du premier creux (11) occupe 1 à 90 % et la face du fond du second creux (20) occupe 1 à 90 % de la surface totale de support de garniture de frein sur le côté de la plaquette de friction.
